Europäisches Patentamt

European Patent Office

Office européen des brevets

(19)

(11) **EP 1 100 283 A1**

(12) **EUROPEAN PATENT APPLICATION**

(43) Date of publication:
 **16.05.2001 Bulletin 2001/20**

(51) Int Cl.⁷: **H04Q 7/38**

(21) Application number: **99440309.5**

(22) Date of filing: **10.11.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(71) Applicant: **ALCATEL**<br>**75008 Paris (FR)**<br><br>(72) Inventors:<br> • **Cordier, Christophe**<br>  **75017 Paris (FR)** | • **De Hoz Garcia-Bellid, Alejandro**<br>  **92100 Boulogne-Billancourt (FR)**<br>• **Bourgoin, Cédric**<br>  **75015 Paris (FR)**<br><br>(74) Representative: **Rausch, Gabriele, Dr. et al**<br>**Alcatel**<br>**Intellectual Property Department, Stuttgart**<br>**70430 Stuttgart (DE)** |

(54) **Method for adjusting the call admission control threshold(s) and call admission control method using the same**

(57)     The present invention concerns a method for adjusting the call admission control threshold(s) of a least one cell of a cellular network and a call admission control method using the same.

Method for adjusting the call admission control threshold(s) of at least one cell of a cellular network, characterised in that said method consists at least, for each cell, in:

- determining repetitively the instantaneous loading level value (Xn) of the considered cell;
- repeating this operation a number (N) of times during a predetermined time period (T);

- comparing the different values (Xn) with the maximum tolerated cell load value (Xth) for the considered cell, or with a value related to said value (Xth), for example through shifting, and determining the number (C) of times where Xn > Xth;
- modifying the maximum allowed cell load value for new call admission (Xcac), by increase or decrease, when C or C/N is different from a given admissible outage threshold value (Vth);
- leaving Xcac unchanged when C or C/N is equal to the given admissible outage threshold value (Vth);
- repeating the aforementioned steps for consecutive time periods (T).

Fig. 1

**Description**

The present invention relates generally to cellular radiocommunication networks, more particularly to quality control in network systems by limitation of the work load accepted by the network in relation with its handling capacity, and concerns a method for adjusting the call admission control threshold(s) of such a network, and a method for controlling new call admissions making use of the preceding adjustment method.

The present invention is directed to so-called Call Admission Control (CAC) procedures, especially in relation with CDMA systems.

The purpose of the CAC procedure is to block (refuse) calls that cannot be handled properly by the network or that would cause a degradation of the quality of service of existing users.

Essentially, CAC is a protective measure that anticipates the effect of a new call on the global operation of the system. CDMA systems being inherently limited by interference, CAC for CDMA is based on soft blocking criteria, usually defined in relation with the loading status of the considered cell of the network. Hence, a CDMA-oriented procedure is designed to block new calls that would eventually overload the system, i.e. cause it to function under intolerable interference conditions.

In practice, the Radio Network Controller (RNC) continuously monitors the loading status of every cell it is controlling. In the uplink, cell load is related to the total power received at the considered base-station, whereas in the downlink cell load status is indicated by the total transmitted power of the said base-station.

For example, cell load can be defined as

- $Xuplink = 1 - \frac{noise\ power}{total\ received\ power\ of\ the\ base\ station}$
- $Xdownlink = $ total transmit power of the base station

In both cases, fast variations of instantaneous load are filtered out and CAC is based on an average cell load value. In fact, two independent CAC procedures must normaly be carried out in parallel for each link, and the call is accepted only if it complies with the constraints of both links.

In this context, CDMA-oriented CAC generally consists of the following steps (for uplink and downlink):

- to maintain an evaluation of the current average cell load;
- to anticipate the cell load increase due to the considered incoming call and to derive a new cell load Xnew (Xnew represents the average load that would be obtained after addition of the new user);
- to compare Xnew with a threshold Xcac.

The call is then accepted if and only if Xnew < Xcac, where Xcac denotes the maximum allowed cell load for new call admission.

In practice, capacity limit of the system is related to a maximum tolerated cell load Xth, and the system is deemed to be in outage whenever the instantaneous load exceeds Xth. As a result, system limit is reached when the outage probability Pout attains a certain level Pth, more precisely when Pout = Pr {Xinst > Xth} = Pth, where Pth represents the maximum accepted outage probability (typically 5%).

In this context, Xcac must be set so that the CAC criterion {Xnew > Xcac} be equivalent to the outage criterion Pout > Pth. In particular, Xth-Xcac represents a margin assuring that the proportion of instantaneous cell load samples beyond the threshold Xth does not exceed Pth.

Xth being known, the technical problem consists in finding an appropriate value for Xcac.

In prior art solutions, a fixed threshold strategy is usually employed: Xcac is predetermined to cover all situations. A worst-case assumption is made regarding the statistical behavior of Xinst and the margin Xth-Xcac is derived based on this assumption. The same value of Xcac is then used throughout system operation.

Nevertheless, the statistical behavior of the cell load is prone to frequent changes due mainly to modifications in propagation conditions. Load statistics are notably affected by mobile speed, standard deviation and mutual correlation properties of shadowing. The changing nature of load statistics renders the known "fixed threshold" approach inappropriate.

Indeed, worst-case scenarios lead to an overestimation of the Xth-Xcac margin. In other words, the obtained CAC threshold is overly selective and many calls will be unduly rejected. In fact, the "fixed-threshold" strategy turns out to be largely sub-optimal in terms of capacity.

Accordingly, the main problem to be solved by the invention is to propose a method for adjusting the CAC threshold(s), in one or both linking direction(s), uplink and/or donwlink, in order to optimise the exploitation of the system capacity.

To that purpose, the present invention concerns a method for adjusting the call admission control threshold(s) of at least one cell of a cellular network, in particular of CDMA (Code Division Multiple Access) communication network, in order to control new call admissions at cell level in relation with the loading status of the requested cell, or an equivalent cell parameter, and with a maximum admissible outage ratio or probability set for the network, characterised in that said method consists at least, for each cell, in:

- determining repetitively the instantaneous loading level value Xn, or the instantaneous value of the equivalent parameter Yn, of the considered cell;
- repeating this operation a number N of times during a predetermined time period T;
- comparing the different values Xn or Yn respectively with the maximum tolerated cell load value Xth

for the considered cell, with the maximum tolerated equivalent parameter value Yth, or with a value related to said value Xth or Yth, for example through shifting, and determining the number C of times where Xn > Xth, Yn > Yth or an equivalent inequation is verified;

- modifying the maximum allowed cell load or maximum equivalent parameter value for new call admission Xcac or Ycac, by increase or decrease, when C or C/N is different from a given admissible outage threshold value Vth;
- leaving Xcac or Ycac unchanged when C or C/N is equal to the given admissible outage threshold value Vth;
- repeating the aforementioned steps for consecutive time periods T.

This invention will be better understood thanks to the following description and drawings of embodiments of said invention given as non limitative examples thereof.

In the accompanying drawings:

Figure 1 is a shematic diagram illustrating the main steps of a preferred embodiment of the invention;

Figures 2A and 2B are time based diagrams representing the evolution of the instantaneous cell load Xn in comparison with Xth and Xcac, respectively before and after adjustement of Xcac according to the invention, when Pout > Pth, and

Figures 3A and 3B are time based diagrams representing the evolution of the instantaneous cell load Xn in comparison with Xth and Xcac, respectively before and after adjustement of Xcac according to the invention, when Pout < Pth.

As indicated beforehand, the method for adjusting the call admission control threshold(s) of at least one cell consists in executing at least the following steps:

- determining repetitively the instantaneous loading level value Xn, or the instantaneous value of the equivalent parameter Yn, of the considered cell;
- repeating this operation a number N of times during a predetermined time period T;
- comparing the different values Xn or Yn respectively with the maximum tolerated cell load value Xth for the considered cell, with the maximum tolerated equivalent parameter value Yth, or with a value related to said value Xth or Yth, for example through shifting, and determining the number C of times where Xn > Xth, Yn > Yth or an equivalent inequation is verified;
- modifying the maximum allowed cell load or maximum equivalent parameter value for new call admission Xcac or Ycac, by increase or decrease, when C or C/N is different from a given admissible outage threshold value Vth;

- leaving Xcac or Ycac unchanged when C or C/N is equal to the given admissible outage threshold value Vth;
- repeating the aforementioned steps for consecutive time periods T.

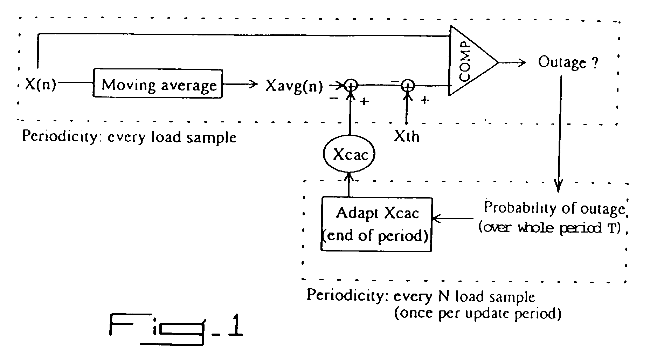

According to a preferred embodiment, illustrated on figure 1, this method can consist more precisely in:

- determining repetitively the instantaneous loading level value Xn of the considered cell and calculating for each value Xn a corresponding average cell load level value Xavg(n) based on a chosen number P of previously determined instantaneous cell load level values Xn-p to Xn-1 and Xn;
- repeating the previous operations over a time period T corresponding to a number N of temporal spaced instantaneous cell load level values Xn;
- determining for the said N instantaneous cell load level values Xn the number C of cases verifying the following relation (1):

  Xn > Xth - (Xcac - Xavg(n)), where Xth is the maximum tolerated cell load value and Xcac is the maximum allowed cell load value for new call admission;
- comparing the ratio C/N, or any equivalent or proportional value, to a level value Vth corresponding to the maximum accepted outage ratio for N instantaneous cell load levels Xn, or to any equivalent or proportional value;
- maintaining the previously set value of Xcac or modifying the said value, by increasing it or decreasing it, according to the result of the comparison operation;
- repeating the aforementioned steps for successive time periods T.

It should be noted that the aforementioned embodiment, even if it has been described more particularly in connection with the cell load as defined previously, can of course be applied to any equivalent parameter or parameters reflecting the loading status of the cell, e. g. power, number of users...

In particular, cell load encompasses or is equivalent to any quantity related to the received power at the considered base station (uplink) and/or the transmit power of the considered base station (downlink). The previous inequation (1) can thus be transformed into an equivalent relation based on an equivalent parameter Yn, Yth, Ycac and Yavg(n).

In order to render the aforementioned method more efficient, the increase or decrease of the Xcac or Ycac value may be function of the magnitude of the difference between C/N and Vth and/or the length of the time periods T may be adjusted based on the expected average number of new calls during each time period T or on the number of new calls registered during the previous time period T within the considered cell (great number of new calls = small time period).

Due to the circumstances or construction and capacity layouts of the network, the adjustement method can be applied to either the downlink or uplink cell load or equivalent parameter, a different adjustement method, or fixed thresholds values, being used for setting the thresholds which are not adjusted by means of the method according to the invention.

Nevertheless, the adjustement method is preferably applied to both the uplink and downlink cell loads or equivalent parameters and also preferably to every cell of the considered CDMA network.

Various aspects and advantages of the inventive adjustement method will now be described in connection with figures 1, 2 and 3 of the enclosed drawings.

As it appears from the preceding features, the invention mainly proposes a simple device to adapt the CAC threshold(s) to the current statistical behavior of instantaneous cell load.

To that effect, a threshold update period is introduced and the CAC threshold Xcac is updated at the end of every period based on the instantaneous load measurements collected during the said period.

First of all, to every instantaneous load sample $X(n)$ or $Xn$ corresponds a moving average cell load $Xavg(n)$ calculated over a sliding window. The use of a moving average makes the scheme more robust to abrupt cell load variations due to the arrival of new calls during the threshold update period.

The basic idea of the invention is to shift the current load samples $X(n)$ of a step corresponding to the gap between Xcac and current moving average $Xavg(n)$ in order to position the load around the limit Xth. Then, an equivalent of the outage probability is calculated over the update period, and, depending on the outage probability result, the threshold Xcac is modified so that the outage probability be as close as possible to Pout without exceeding this value.

A variable-step strategy, where the step-size depends on the proximity of the evaluated outage probability to Pout can be employed for adjusting Xcac.

Refering more precisely to figure 1, N denotes the size of the update period number of samples. The measured outage probability is defined by $Pr\{X(n) > Xth - (Xcac - Xavg(n))\}$. The update period is assumed to be long enough so that the outage probability be evaluatcd accurately.

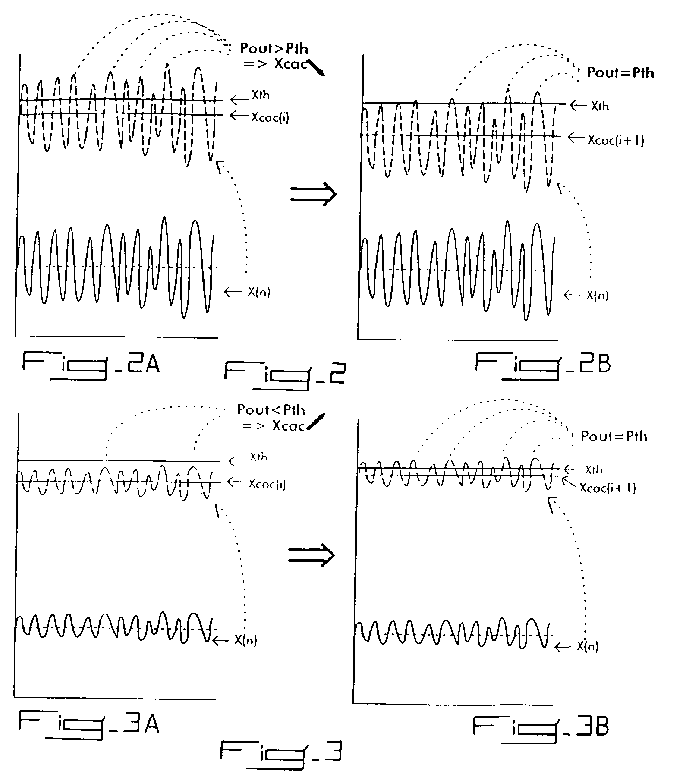

Figures 2 and 3 highlight the main principles of the proposed CAC threshold adjustement method (in practice in the form of an algorithm), considering two different types of cell load conditions. It is shown in particular how the CAC margin should be set to be in accordance with the statistical behavior of the cell load. In these drawings, Xcac(i) denotes the threshold value after update period i and Xcac(i + 1) denotes the threshold value after update period i + 1.

With the proposed solution, the CAC threshold automatically follows changes in load statistics: equivalence between the CAC criterion and the outage criterion describing the capacity limit is always obtained. Hence, the considered method ensures a maximum utilisation of available system capacity.

The adjustment method is preferably carried out at each base station of every cell of the network, but could also be carried out central by the RNC.

The invention also concerns a method for controlling new call admissions in a CDMA network, wherein the downlink and/or the uplink call admission control threshold(s) Xcac of each cell of said network is (are) updated at given time intervals, according to the method described before, the uplink and/or downlink cell load increase due to each new incoming call request is calculated, the resulting expected average cell load value Xnew in case of addition of the new user is derived and the new call request is accepted and the telecommunication link established only if Xnew < Xcac for the concerned cell.

According to a preferred embodiment, Xcac is adjusted in uplink and downlink transmission paths and the new call is accepted only if Xnew < Xcac for both downlink and uplink cell loads.

The present invention is, of course, not limited to the preferred embodiments described and represented herein, changes can be made or equivalents used without departing from the scope of the invention.

**Claims**

1. Method for adjusting the call admission control threshold(s) of at least one cell of a cellular network, in particular of CDMA (Code Division Multiple Access) communication network, in order to control new call admissions at cell level in relation with the loading status of the requested cell, or an equivalent cell parameter, and with a maximum admissible outage ratio or probability set for the network, characterised in that said method consists at least, for each cell, in:

   - determining repetitively the instantaneous loading level value (Xn), or the instantaneous value of the equivalent parameter (Yn), of the considered cell;
   - repeating this operation a number (N) of times during a predetermined time period (T);
   - comparing the different values (Xn) or (Yn) respectively with the maximum tolerated cell load value (Xth) for the considered cell, with the maximum tolerated equivalent parameter value (Yth), or with a value related to said value (Xth) or (Yth), for example through shifting, and determining the number (C) of times where Xn > Xth, Yn > Yth or an equivalent inequation is verified;

- modifying the maximum allowed cell load or maximum equivalent parameter value for new call admission (Xcac) or (Ycac), by increase or decrease, when C or C/N is different from a given admissible outage threshold value (Vth);
- leaving Xcac or Ycac unchanged when C or C/N is equal to the given admissible outage threshold value (Vth);
- repeating the aforementioned steps for consecutive time periods (T).

2. Method according to claim 1, wherein it consists more precisely in:

- determining repetitively the instantaneous loading level value (Xn) of the considered cell and calculating for each value (Xn) a corresponding average cell load level value (Xavg(n)) based on a chosen number (P) of previously determined instantaneous cell load level values (Xn-p to Xn-1) and (Xn);
- repeating the previous operations over a time period (T) corresponding to a number (N) of temporal spaced instantaneous cell load level values (Xn);
- determining for the said N instantaneous cell load level values (Xn) the number (C) of cases verifying the following relation: Xn > Xth - (Xcac - Xavg(n)), where (Xth) is the maximum tolerated cell load value and (Xcac) is the maximum allowed cell load value for new call admission;
- comparing the ratio C/N, or any equivalent or proportional value, to a level value (Vth) corresponding to the maximum accepted outage ratio for N instantaneous cell load levels (Xn), or to any equivalent or proportional value;
- maintaining the previously set value of Xcac or modifying the said value, by increasing it or decreasing it, according to the result of the comparison operation;
- repeating the aforementioned steps for successive time periods (T).

3. Method according to claim 1 or 2, wherein the increase or decrease of the Xcac or Ycac value is function of the magnitude of the difference between C/N and Vth.

4. Method according to anyone of claims 1 to 3, wherein the length of the time periods (T) is adjusted based on the expected average number of new calls during each time period (T) or on the number of new calls registered during the previous time period (T) within the considered cell.

5. Method according to anyone of claims 1 to 4, wherein it is applied to the uplink cell load or equivalent cell parameter.

6. Method according to anyone of claims 1 to 4, wherein it is applied to the downlink cell load or equivalent cell parameter.

7. Method according to anyone of claims 1 to 6, wherein it is applied to both the uplink and downlink cell loads or equivalent cell parameters.

8. Method according to anyone of claims 1 to 7, wherein it is applied to every cell of the considered CDMA network.

9. Method for controlling new calls admission in a CDMA network, wherein the downlink and/or the uplink call admission control threshold(s) (Xcac) of each cell of said network is (are) updated at given time intervals, according to anyone of claims 1 to 8, the uplink and/or downlink cell load increase due to each new incoming call request is calculated, the resulting expected average cell load value (Xnew) in case of addition of the new user is derived and the new call request is accepted and the telecommunication link established only if Xnew < Xcac for the concerned cell.

10. Method according to claim 9, wherein Xcac is adjusted in uplink and downlink transmission paths and the new call is accepted only if Xnew < Xcac for both downlink and uplink cell loads.

Fig-1

Pout>Pth
=> Xcac ↘

← Xth
← Xcac(i)

← X(n)

⇒

Pout=Pth

← Xth

← Xcac(i+1)

← X(n)

**Fig_2A**        **Fig_2**        **Fig_2B**

Pout<Pth
=> Xcac ↗

← Xth
← Xcac(i)

← X(n)

⇒

Pout=Pth

← Xth
Xcac(i+1)

← X(n)

**Fig_3A**        **Fig_3**        **Fig_3B**

European Patent Office

## EUROPEAN SEARCH REPORT

Application Number

EP 99 44 0309

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 750 440 A (NIPPON TELEGRAPH & TELEPHONE) 27 December 1996 (1996-12-27) * column 4, line 14 - line 32 * * column 13, line 32 - column 14, line 40 * * column 17, line 25 - column 18, line 58 * * figures 8,10 * | 1,2,8,9 | H04Q7/38 |
| A | US 5 101 503 A (FURUYA YUKITSUNA) 31 March 1992 (1992-03-31) * column 2, line 58 - column 3, line 39 * * figure 1 * | 1,2 | |
| A | US 5 796 722 A (STOLYAR ALEKSANDR L ET AL) 18 August 1998 (1998-08-18) * column 3, line 55 - column 4, line 64 * * figures 2,5 * | 1 | |

|  |  |
|---|---|
|  | TECHNICAL FIELDS SEARCHED (Int.Cl.7) |
|  | H04Q |

The present search report has been drawn up for all claims

| Place of search | Date of completion of the search | Examiner |
|---|---|---|
| THE HAGUE | 5 April 2000 | Barel, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 99 44 0309

This annex lists the patent family members relating to the patent documents cited in the above-mentioned European search report.
The members are as contained in the European Patent Office EDP file on
The European Patent Office is in no way liable for these particulars which are merely given for the purpose of information.

05-04-2000

| Patent document cited in search report | | Publication date | Patent family member(s) | | Publication date |
|---|---|---|---|---|---|
| EP 0750440 | A | 27-12-1996 | JP | 2909009 B | 23-06-1999 |
| | | | JP | 9084105 A | 28-03-1997 |
| | | | JP | 2905132 B | 14-06-1999 |
| | | | JP | 9069824 A | 11-03-1997 |
| | | | CN | 1146700 A | 02-04-1997 |
| | | | US | 5838671 A | 17-11-1998 |
| US 5101503 | A | 31-03-1992 | JP | 2190039 A | 26-07-1990 |
| | | | JP | 2531254 B | 04-09-1996 |
| | | | GB | 2229065 A,B | 12-09-1990 |
| US 5796722 | A | 18-08-1998 | BR | 9702209 A | 20-07-1999 |
| | | | CA | 2226762 A | 27-11-1997 |
| | | | CN | 1193431 A | 16-09-1998 |
| | | | EP | 0845177 A | 03-06-1998 |
| | | | JP | 11509717 T | 24-08-1999 |
| | | | WO | 9744925 A | 27-11-1997 |

EPO FORM P0459

For more details about this annex : see Official Journal of the European Patent Office, No. 12/82